# EUROPÄISCHE PATENTANMELDUNG

(11) **EP 3 626 786 A1**
(43) Veröffentlichungstag der Anmeldung: **25.03.2020**
(21) Anmeldenummer: 19197963.2
(22) Anmeldetag: 18.09.2019
(51) Int. Cl.: C09D 5/03, C09D 163/00, C09D 167/02, B05B 5/053, B05D 1/06, B05D 1/36, B05D 7/00

(54) **PULVERLACKSYSTEM ZUM BESCHICHTEN EINES INSBESONDERE METALLISCHEN SUBSTRATS, DESSEN VERWENDUNG AUF EINEM METALLISCHEN SUBSTRAT UND VERFAHREN ZUM AUFTRAGEN EINES DERARTIGEN PULVERLACKSYSTEMS AUF EIN METALLISCHES SUBSTRAT**

(30) Priorität: 19.09.2018 DE 102018123073
(71) Anmelder: Emil Frei GmbH & Co. KG, 78199 Bräunlingen (DE)
(72) Erfinder: Schelling, Alexander, 78183 Hüfingen (DE)
(74) Vertreter: Westphal, Mussgnug & Partner Patentanwälte mbB

(57) **Zusammenfassung**

Die vorliegende Erfindung betrifft ein Pulverlacksystem (12) zum Beschichten eines insbesondere metallischen Substrats (10), umfassend
- eine erste Pulverlackschicht (14), welche
als eine Grundierung (18) auf Basis eines Epoxidharzes (20) und mit einem ersten Härter (22) ausgebildet ist, oder
als eine Grundierungszusammensetzung (30) ausgebildet ist, wobei die Grundierungszusammensetzung (30) ein katalysiertes Carboxyl-funktionelles Polyesterharz (32) und ein Epoxidharz (34) im Verhältnis von 80:20 Gew.-% bis 45:55 Gew.-% umfasst oder aus diesen besteht, und
- eine auf die erste Pulverlackschicht (14) aufgetragene zweite Pulverlackschicht (16), welche als eine Decklackzusammensetzung (24) ausgebildet ist, wobei die Decklackzusammensetzung (24) Carboxyl-funktionelles Polyesterharz (26) und einen zweiten Härter (28) auf β-Hydroxyalkylamid-Basis im Verhältnis von 98:2 Gew.-% bis 92:8 Gew.-% umfasst oder hieraus besteht.

Weiterhin betrifft die vorliegende Erfindung ein Substrat, welches mit einem solchen Pulverlacksystem beschichtet ist und/oder auf welches ein Pulverlacksystem mit einem derartigen Verfahren aufgetragen ist.

## Beschreibung

Die vorliegende Erfindung betrifft ein Pulverlacksystem zum Beschichten eines Substrats und ein Verfahren zum Auftragen eines derartigen Pulverlacksystems auf ein Substrat. Darüber hinaus betrifft die vorliegende Erfindung ein Substrat, welches mit einem solchen Pulverlacksystem beschichtet ist und/oder auf welches ein Pulverlacksystem mit einem derartigen Verfahren aufgetragen ist.

Die hier diskutierten Pulverlacksysteme umfassen mindestens eine erste Pulverlackschicht und eine zweite Pulverlackschicht, bei welchem die direkt auf ein Substrat aufgetragene erste Pulverlackschicht häufig auch als Grundierung oder Primer bezeichnet wird. Die obere Schicht, bei Pulverlacksystemen mit zwei Pulverlackschichten die zweite Pulverlackschicht, wird häufig als Decklackschicht bezeichnet. Bei dem Substrat soll es sich insbesondere um ein metallisches Substrat handeln, welches aus Stahl bestehen kann oder Stahl umfasst. Für den Fall, dass das Substrat Stahl umfasst, soll die Pulverlackschicht auf den Stahl aufgetragen werden. Auch Aluminium kann als metallisches Substrat verwendet werden.

Es ist auch möglich, auf die zweite Pulverlackschicht hinaus noch weitere Pulverlackschichten aufzutragen. Die Pulverlackschichten werden im sogenannten Pulver-in-Pulver-Auftragungsverfahren auf ein Substrat aufgetragen, häufig auch "*dry-on-dry-application*" genannt. Eine wesentliche Eigenschaft dieses Auftragungsverfahrens ist, dass die zweite Pulverlackschicht unmittelbar auf die erste Pulverlackschicht aufgetragen werden kann, ohne dass die erste Pulverlackschicht vor dem Auftragen der zweiten Pulverlackschicht aushärten muss. Nachdem die Pulverlackschichten aufgetragen worden sind, folgt ein gemeinsamer Aushärteprozess bei einer Temperatur und Zeitdauer, welche eine ausreichende Vernetzung der ersten und zweiten Pulverlackschicht ermöglichen, wobei die Pulverlackschichten schmelzen. Bei der gemeinsamen Schmelz- und Vernetzungsphase kommt es zu Wechselwirkungen zwischen den Pulverlackschichten, welche je nach Auswahl und Zusammensetzung der ersten Pulverlackschicht und der zweiten Pulverlackschicht die Oberflächeneigenschaften des fertigen Pulverlacksystems beeinflussen.

Bei einer Inkompatibilität zwischen den Pulverlackschichten in der gemeinsamen Schmelz- und Vernetzungsphase kann es zu einer Ausbildung von sichtbaren Oberflächenstrukturen von unterschiedlicher Ausprägung an der Oberfläche des Pulverlacksystems kommen. Diese Inkompatibilität beruht größtenteils auf Viskositäts-, Reaktivitäts-, Oberflächenspannungs-, Verlaufsunterschieden von Grundierung und Decklackschicht. Diese sichtbaren Oberflächenstrukturen können zu einem reduzierten Glanz (Vermattung) führen. Der Glanz ist ein einfacher Messwert, der proportional zu der von einer Oberfläche reflektierten Lichtmenge ist und bestimmt, wie glänzend die Oberfläche erscheint.

Dieses bei unter Verwendung des Pulver-in-Pulver-Verfahrens aufgetragenen Lacksystemen auftretende Phänomen ist beispielsweise in der WO 2011/134986 A1 beschrieben. Weitere Lacksysteme, die für das Pulver-in-Pulver-Auftragungsverfahren geeignet sind, sind aus der WO 2014/150167 A1 und der WO 2014/150167 A1 bekannt, wobei diese Schriften auf andere Besonderheiten von Lacksystemen eingehen, die mit dem Pulver-in-Pulver-Auftragungsverfahren hergestellt werden. Auch in der WO2014/029769 A1 ist ein Verfahren zum Auftragen eines Lacksystems, welches für das Pulver-in-Pulver-Auftragungsverfahren geeignet ist, auf ein Substrat offenbart.

Die oben genannten Oberflächenstrukturen können die wahrgenommene Qualität des Erscheinungsbildes mindern, ohne den Glanz zu beeinträchtigen. Wenngleich zwei Pulverlacksysteme identische Glanzwerte aufweisen können, kann die Qualität ihres Erscheinungsbildes sehr unterschiedlich sein.

Insbesondere dann, wenn die Pulverlacksysteme einen Hochglanz bereitstellen sollen, kann die Qualität des Erscheinungsbildes zusätzlich mit dem sogenannten DOI-Wert ("*distictness of image*") bestimmt werden, welcher das Maß der Abbildungsschärfe des an einer Beschichtungsoberfläche reflektierten Bildes darstellt. Die DOI-Werte werden auf einer Skala von 0 bis 100 angegeben, wobei ein DOI-Wert von 100 eine ideal glatte Fläche beschreibt, welche die bestmögliche Abbildungsschärfe bereitstellt.

Ein Hochglanz wird dann angenommen, wenn der Glanz 90 Glanzeinheiten oder mehr aufweist. Symptome schlechter DOI-Werte sind sichtbare Strukturen, welche die reflektierten Bilder verzerren. Anzumerken ist, dass der Glanzwert und der DOI-Wert in keinem festen Verhältnis zueinander stehen. Ansteigende Glanzwerte müssen nicht zwangsläufig zu ansteigenden DOI-Werten führen und umgekehrt. Unterhalb von 85 Glanzeinheiten werden nur sehr niedrige DOI-Werte erreicht, die unter 20 und meistens unter 10 liegen.

Aufgabe einer Ausführungsform der vorliegenden Erfindung ist es daher, ein Pulverlacksystem anzugeben, welches mit dem Pulver-in-Pulver-Auftragungsverfahren auf ein insbesondere metallisches Substrat aufgetragen werden kann und auf reproduzierbare Weise eine hohe Qualität des Erscheinungsbildes bereitstellt. Des Weiteren liegt einer Ausgestaltung der vorliegenden Erfindung die Aufgabe zugrunde, ein Verfahren anzugeben, mit dem derartige Pulverlacksysteme auf ein insbesondere metallisches Substrat mit einer hohen Qualität des Erscheinungsbildes aufgetragen werden können. Darüber hinaus liegt eine Ausbildung der Erfindung die Aufgabe zugrunde, ein insbesondere metallisches Substrat anzugeben, welches mit einem derartigen Lacksystem beschichtet ist.

Diese Aufgabe wird mit den in den Ansprüchen 1, 5 und 7 angegebenen Merkmalen gelöst. Vorteilhafte Ausführungsformen sind Gegenstand der Unteransprüche.

Eine Ausführungsform der Erfindung betrifft ein Pulverlacksystem zum Beschichten eines Substrats, umfassend
- eine erste Pulverlackschicht, welche
   als eine Grundierung auf Basis eines Epoxidharzes und mit einem ersten Härter ausgebildet ist, oder als eine Grundierungszusammensetzung ausgebildet ist, wobei die Grundierungszusammensetzung ein katalysiertes Carboxyl-funktionelles Polyesterharz und ein Epoxidharz im Verhältnis von 80:20 Gew.-% bis 45:55 Gew.-% umfasst oder hieraus besteht, und
- eine auf die erste Pulverlackschicht aufgetragene zweite Pulverlackschicht, welche als eine Decklackzusammensetzung ausgebildet ist, wobei die Decklackzusammensetzung ein Carboxyl-funktionelles Polyesterharz und einen zweiten Härter auf β-Hydroxyalkylamid-Basis im Verhältnis von 98:2 Gew.-% bis 92:8 Gew.-% umfasst oder hieraus besteht, wobei
- das Pulverlacksystem einen Glanz von ≥ 85 Glanzeinheiten und einen DOI-Wert ≥ 35 und insbesondere ≥ 55 aufweist, wobei
- das Pulverlacksystem
   einen Glanz von ≥ 85 Glanzeinheiten und einen DOI-Wert ≥ 35 und insbesondere ≥ 55 aufweist.

Es hat sich überraschenderweise herausgestellt, dass sich mit einem derartigen Lacksystem, welches für das Pulver-in-Pulver-Auftragungsverfahren geeignet ist, ein Erscheinungsbild mit hoher Qualität auf reproduzierbare Weise bereitstellen lässt. Zudem kommen für das vorschlagsgemäße Lacksystem keine Substanzen zum Einsatz, welche erbgutschädigend sind, wie es beispielsweise bei Triglycidylisocyanurat (TGIC) der Fall ist, der häufig als Härter verwendet wird. Auch beinhaltet das vorschlagsgemäße Lacksystem keine aromatischen Gylcidylester, welche hautsensibilisierend und fruchtbarkeitsschädigend sind. Das vorschlagsgemäße Lacksystem umfasst nur Komponenten, welche zum Prioritätstag der vorliegenden Anmeldung als gesundheitlich unbedenklich angesehen werden.

Der verwendete erste Härter kann katalytisch für die Selbstvernetzung des Epoxidharzes sein und dabei selbst nicht an der Vernetzung teilnehmen. Es ist aber genauso gut möglich, dass der erste Härter zusätzlich die Vernetzung eines weiteren Härters, welcher an der Vernetzung teilnimmt, katalysiert.

Die genannten Verhältnisse sind so zu verstehen, dass sie sich nur auf die jeweiligen in Beziehung zueinander gesetzten Komponenten beziehen und daher von Pigmenten, Füllstoffen und Additiven, die dem Pulverlacksystem je nach Anwendung zugesetzt werden können, nicht beeinflusst werden.

Folgende Parameter sind für die Auslegung eines Harzes für den Einsatz in Pulverlacken wichtig: Molekulargewicht, Funktionalität, Glasübergangstemperatur (Tg), Schmelzviskosität und die Reaktivität. Hier muss bei der Harzformulierung ein Kompromiss aus diesen Parametern gefunden werden, um akzeptable Prozesseigenschaften während der Pulverlackherstellung, der Stabilität während der Lagerung sowie guter Lackeigenschaften des finalen Pulverlacks zu erzielen.

Über die Auswahl der verwendeten Ausgangsrohstoffe können die Lichtbeständigkeit, chemische Beständigkeiten, mechanische Eigenschaften sowie die Funktionalität und der Verzweigungsgrad des Polyesterharzes beeinflusst werden. So werden je nach Einsatzgebiet (Innen oder Außen) sowie des verwendeten Vernetzungspartners unterschiedliche Ausgangsrohstoffe verwendet und unter-schiedliche Harzparameter eingestellt. Folglich unterscheidet sich ein katalysiertes Carboxyl-funktionelles Polyesterharz von einem Carboxyl-funktionellen Polyesterharz unter anderen dadurch, dass das katalysierte Carboxyl-funktionelle Polyesterharz so modifiziert wurde, dass die Vernetzung mit dem Epoxidharz gefördert wird, während das Carboxyl-funktionelle Polyesterharz auf optimale Decklackeigenschaften wie UV-beständigkeit hin modifiziert worden ist.

Um das Carboxyl-funktionelle Polyesterharz zu katalysieren, können diesem beispielsweise aminbasierte Katalysatoren, beispielsweise Decyldimethylamine (DMDA) oder PhasentransferKatalysatoren wie quartäre Phosphoniumsalze, beispielsweise Ethyl-Triphenyl-Phosphonium-Bromid (ETPB) oder quartäre Ammoniumsalze, beispielsweise Tetra-Butyl-Ammonium-Bromid (TBAB) zugesetzt werden. Hierdurch wird die Reaktion zwischen dem Carboxyl-funktionellen Polyesterharz und dem Epoxidharz ausreichend katalysiert. Zudem lässt sich ein Erscheinungsbild mit besonders hoher Qualität bereitstellen.

Üblicherweise lassen sich die Reaktion zwischen dem Carboxyl-funktionelles Polyesterharz und dem zweiten Härter auf β-Hydroxyalkylamid-Basis nicht katalysieren, so dass in der Decklackzusammensetzung nicht katalysiert werden muss.

Die Grundierung auf Basis eines Epoxidharzes kann ein Epoxidharz als solches oder Derivate von Epoxidharzen umfassen oder aus diesen bestehen. Der zweite Härter auf β-Hydroxyalkylamid-Basis kann β-Hydroxyalkylamid als solches oder β-Hydroxyalkylamid-Derivate umfassen oder aus diesen bestehen. Derartige β-Hydroxyalkylamid-Derivate sind unter dem Handelsname Primid® XL-552, QM-1260 und SF-4510 erhältlich. Diese β-Hydroxyalkylamid-Derivate können auch miteinander vermischt werden.

Das vorschlagsgemäße Lacksystem weist einen Glanz von ≥ 85 Glanzeinheiten und einen DOI-Wert ≥ 35 und insbesondere ≥ 55 auf. Das Erscheinungsbild eines Pulverlacksystems, welches einen Glanz von ≥ 85 Glanzeinheiten und einen DOI-Wert ≥ 35 aufweist, weist eine hohe Qualität auf. Besonders hochwertige Erscheinungsbilder werden dann erreicht, wenn das Pulverlacksystem einen DOI-Wert von ≥ 55 aufweist. Diese Qualität des Erscheinungsbildes lässt sich mit dem vorschlagsgemäßen Pulverlacksystem auf einfache und reproduzierbare Weise bereitstellen.

Nach Maßgabe einer weiteren Ausführungsform beträgt das Verhältnis von katalysiertem Carboxyl-funktionellen Polyester zu Epoxidharz der Grundierungszusammensetzung zwischen 65:35 Gew.-% und 55:45 Gew.-% insbesondere zwischen 58:42 Gew.-% und 62:38 Gew.-%. Es hat sich überraschenderweise herausgestellt, dass sich in diesem Verhältnis von katalysiertem Carboxyl-funktionellen Polyester zu Epoxidharz ein Erscheinungsbild mit besonders hoher Qualität bereitstellen lässt.

In einer weitergebildeten Ausführungsform kann das Verhältnis von Carboxyl-funktionellem Polyesterharz zum zweiten Härter auf β-Hydroxyalkylamid-Basis der Decklackzusammensetzung zwischen 96:4 Gew.-% und 94:6 Gew.-% betragen. Es hat sich überraschenderweise herausgestellt, dass sich in diesem Verhältnis von Polyester zu Primidhärter ein Erscheinungsbild mit besonders hoher Qualität bereitstellen lässt. Insbesondere lässt sich die Entgasung so einstellen, dass sie nicht zu Blasen führt.

Bei einer weitergebildeten Ausführungsform kann der erste Härter auf Basis von Aminen (z.B. Dicyandiamid, DCD) oder Di- oder Polyphenolen oder Carboxy-funktionellen Acrylatharzen formuliert sein, der katalysiert wird mit substituierten Imidazolen oder Epoxy-Imidazol-Addukten oder substituierten Imidazolinen oder Uron-basierten Beschleunigern.

Darüberhinaus können als erster Härter folgende "Matthärter" eingesetzt werden:
- Salze von mindestens difunktionellen Polycarbonsäuren (z.B. Pyromellithsäure) und cyclischen Amidinen (z.B. 2-Phenylimidazolin), oder
- eine Kombination aus Cyanursäure mit 2-Phenylimidazolin.

Es hat sich überraschenderweise herausgestellt, dass sich unter Verwendung derartiger Härter ein Pulverlacksystem mit einem Erscheinungsbild besonders hoher Qualität bereitstellen lässt.

Es ist dabei zu beachten, dass die eingesetzten Katalysatoren entweder die Autovernetzung des Epoxidharzes oder die Vernetzung mit einer weiteren Komponente katalysieren. In einigen Fällen kann beides der Fall sein.

Eine Ausgestaltung der Erfindung betrifft die Verwendung eines Pulverlacksystems nach einem der vorherigen Ausführungsformen zum Auftragen auf ein Substrat sowie ein Verfahren zum Auftragen eines Pulverlacksystems nach einem der vorherigen Ausführungsformen auf ein Substrat, umfassend die Schritte:
- Auftragen der ersten Pulverlackschicht auf das Substrat unter Verwendung eines Korona-Aufladungssystems mit einer negativen Polarität und Auftragen der zweiten Pulverlackschicht auf das Substrat unter Verwendung eines Korona-Aufladungssystems mit einer negativen Polarität, oder
- Auftragen der ersten Pulverlackschicht auf das Substrat unter Verwendung eines Korona-Aufladungssystems mit einer negativen Polarität und Auftragen der zweiten Pulverlackschicht auf das Substrat unter Verwendung eines Korona-Aufladungssystems mit einer positiven Polarität, oder
- Auftragen der ersten Pulverlackschicht auf das Substrat unter Verwendung eines Korona-Aufladungssystems mit einer negativen Polarität und Auftragen der zweiten Pulverlackschicht auf das Substrat unter Verwendung eines Tribo-Aufladungssystems mit einer positiven Polarität, oder
- Auftragen der ersten Pulverlackschicht auf das Substrat unter Verwendung eines Tribo-Aufladungssystems mit einer positiven Polarität und Auftragen der zweiten Pulverlackschicht auf das Substrat unter Verwendung eines Tribo-Aufladungssystems mit einer positiven Polarität.

Welche Art der Auftragung gewählt wird, hängt insbesondere von der Geometrie des zu beschichtenden Substrats ab.

In einer weiteren Ausgestaltung umfassen die vorschlagsgemäße Verwendung und das Verfahren den Schritt des Aufheizens des beschichteten Substrats auf eine Temperatur von ≥ 140°C. Das Substrat kann beispielsweise in einem Umluftofen mit heißer Luft oder mit Infrarot-Strahlung aufgeheizt werden. Es hat sich gezeigt, dass bei diesen Temperaturen eine ausreichende Vernetzung der ersten und zweiten Pulverlackschicht ermöglicht wird. Je nach gewählter Temperatur beträgt die Zeitdauer, über welche das Substrat auf der angegebenen Temperatur gehalten wird, üblicherweise zwischen 5 und 40 Minuten.

Eine Ausbildung der Erfindung betrifft die Verwendung eines Pulverlacksystems nach einem der vorherigen Ausführungsformen, welches auf ein metallisches Substrat aufgetragen ist. Die technischen Effekte und Vorteile, die sich mit den vorschlagsgemäßen Verwendungen erreichen lassen, entsprechen denjenigen, die für das vorliegende Pulverlacksystem erörtert worden sind. Zusammenfassend sei darauf hingewiesen, dass sich auf kostengünstige und reproduzierbare Weise das Pulverlacksystem mit einem Erscheinungsbild einer hohen Qualität bereitstellen lässt.

Die Erfindung wird im Folgenden unter Bezugnahme auf die beigefügten Zeichnungen sowie anhand von Ausführungsbeispielen näher erläutert. Es zeigen
- Figur 1A: eine prinzipielle Schnittdarstellung eines Substrats, welches mit einem Pulverlacksystem nach einem ersten Ausführungsbeispiel beschichtet ist,
- Figur 1B: eine prinzipielle Schnittdarstellung eines Substrats, welches mit einem Pulverlacksystem nach einem zweiten Ausführungsbeispiel beschichtet ist, und
- Figuren 2A bis 2D: prinzipielle Darstellungen von vier verschiedenen Ausführungsbeispielen von Auftragungsverfahren.

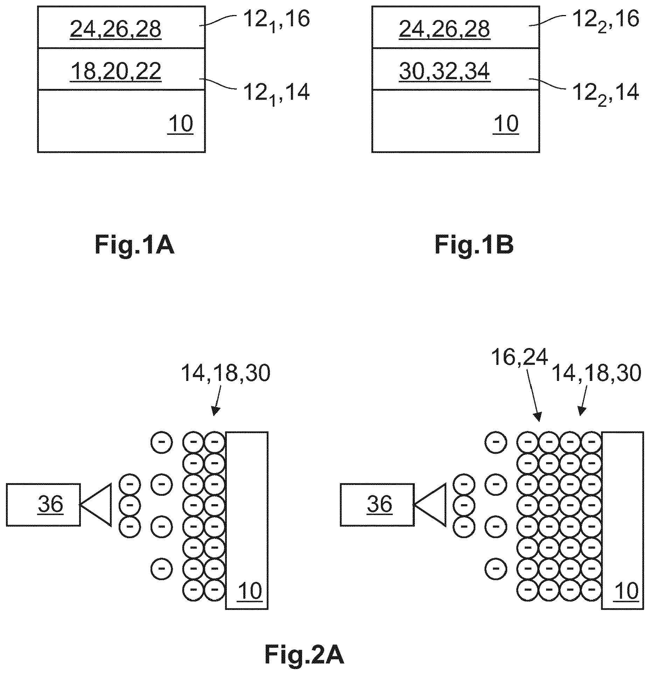

In Figur 1A ist ein Substrat 10 anhand einer prinzipiellen Schnittdarstellung gezeigt, welches mit einem erfindungsgemäßen Pulverlacksystem 12₁ nach einem ersten Ausführungsbeispiel beschichtet ist. Das Substrat 10 ist dabei ein metallisches Substrat 10 aus Stahl, beispielsweise aus Edelstahl und kann Teil einer größeren Einheit wie eines Tragwerks oder einer Maschine sein. Das auf das Substrat 10 aufgetragene Pulverlacksystem 12₁ weist eine erste Pulverlackschicht 14 und eine darauf aufgetragene zweite Pulverlackschicht 16 auf. Die erste Pulverlackschicht 14 ist als eine Grundierung 18 auf Basis eines Epoxidharzes 20 ausgebildet, wobei das Epoxidharz 20 durch Zugabe eines ersten Härters 22 vernetzt ist. Der erste Härter 22 kann aus der Gruppe umfassend Amine, Di- oder Polyphenole, Carboxy-funktionelle Acrylatharze, substituierte Imidazole, Epoxy-Imidazol-Addukte, substituierte Imidazoline, Salze von mindestens difunktionellen Polycarbonsäuren und cyclische Amidine ausgewählt werden. Weiterhin kann der erste Härter 22 aus einer Kombination aus Cyanursäure mit 2-Phenylimidazolin bestehen. Die aufgeführten ersten Härter können auch in Mischung eingesetzt werden.

Die zweite Pulverlackschicht 16 ist als eine Decklackzusammensetzung 24 ausgebildet. Die Decklackzusammensetzung 24 umfasst Carboxyl-funktionelles Polyesterharz 26 und einen zweiten Härter 28 auf β-Hydroxyalkylamid-Basis im Verhältnis von 98:2 Gew.-% bis 92:8 Gew.-% oder besteht hieraus. Bevorzugt beträgt das Verhältnis zwischen dem Carboxyl-funktionellen Polyesterharz 26 und dem zweiten Härter 28 zwischen 96:4 Gew.-% und 94:6 Gew.-%.

Der zweite Härter 28 auf β-Hydroxyalkylamid-Basis kann β-Hydroxyalkylamid als solches oder β-Hydroxyalkylamid-Derivate umfassen, welche unter dem Handelsname Primid® XL-552, QM-1260 und SF-4510 erhältlich sind. Auch Mischungen aus den β-Hydroxyalkylamid-Derivaten können für den zweiten Härter 28 verwendet werden.

In Figur 1B ist ein metallisches Substrat 10 anhand einer prinzipiellen Schnittdarstellung gezeigt, welches mit einem erfindungsgemäßen Pulverlacksystem 12₂ nach einem zweiten Ausführungsbeispiel beschichtet ist. Im zweiten Ausführungsbeispiel umfasst die erste Pulverlackschicht 14 eine Grundierungszusammensetzung 30, die ein katalysiertes Carboxyl-funktionelles Polyesterharz 32 und ein Epoxidharz 34 im Verhältnis von 80:20 Gew.-% bis 45:55 Gew.-%, bevorzugt von 65:35 bis 55:45 Gew.-% und besonders bevorzugt von 58:42 Gew.-% bis 62:38 Gew.-% umfasst oder hieraus besteht. Da in diesem Fall das Carboxyl-funktionelles Polyesterharz 32 katalysiert ist, ist für die Aushärtung kein zusätzlicher Härter notwendig.

Die zweite Pulverlackschicht 16 des Pulverlacksystems 12₂ nach dem zweiten Ausführungsbeispiel ist genauso aufgebaut wie die zweite Pulverlackschicht 16 des Pulverlacksystems 12₁ nach dem ersten Ausführungsbeispiel.

Sowohl das Pulverlacksystem 12₁ nach dem ersten Ausführungsbeispiel als auch das Pulverlacksystem 12₂ nach dem zweiten Ausführungsbeispiel weisen einen Glanz von ≥ 85 Glanzeinheiten sowie einen DOI-Wert von ≥ 35 auf.

In den Figuren 2A bis 2D sind verschiedene Ausführungsbeispiele von Auftragungsverfahren dargestellt, mit welchen die vorschlagsgemäße Pulverlacksysteme 12₁, 12₂ auf das Substrat 10 aufgetragen werden kann.

In Figur 2A wird die erste Pulverlackschicht 14 unter Verwendung eines Korona-Aufladungssystems 36 mit einer negativen Polarität versehen und auf das Substrat 10 aufgetragen. Anschließend wird die zweite Pulverlackschicht 16 ebenfalls unter Verwendung eines Korona-Aufladungssystems 36 mit einer negativen Polarität versehen und auf die erste Pulverlackschicht 14 aufgetragen.

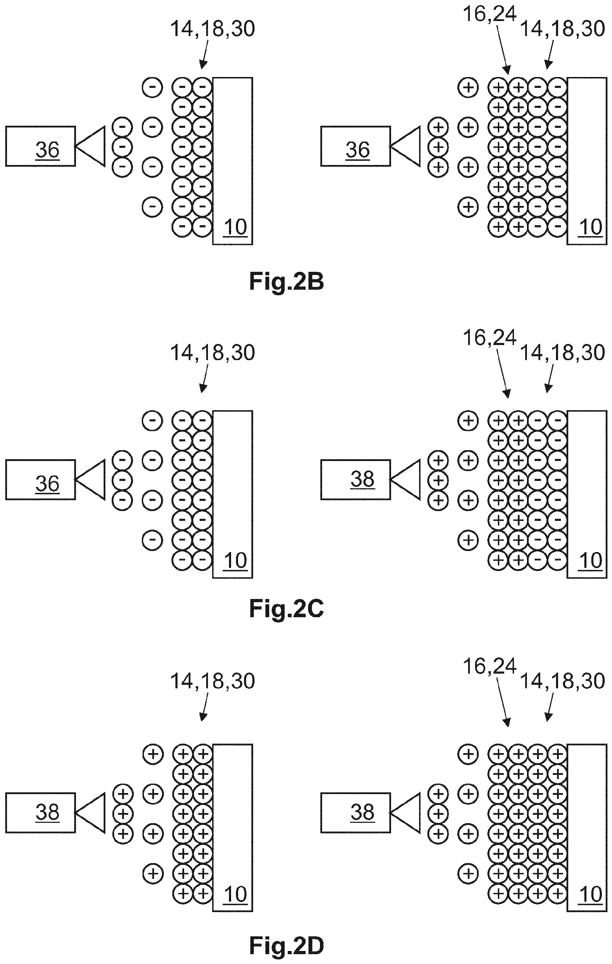

In Figur 2B wird die erste Pulverlackschicht 14 unter Verwendung eines Korona-Aufladungssystems 36 mit einer negativen Polarität versehen und auf das Substrat 10 aufgetragen. Anschließend wird die zweite Pulverlackschicht 16 ebenfalls unter Verwendung eines Korona-Aufladungssystems 36 mit einer positiven Polarität versehen und auf die erste Pulverlackschicht 14 aufgetragen.

In Figur 2C wird die erste Pulverlackschicht 14 unter Verwendung eines Korona-Aufladungssystems 36 mit einer negativen Polarität versehen und auf das Substrat 10 aufgetragen. Anschließend wird die zweite Pulverlackschicht 16 unter Verwendung eines Tribo-Aufladungssystems 38 mit einer positiven Polarität versehen und auf die erste Pulverlackschicht 14 aufgetragen.

In Figur 2D wird die erste Pulverlackschicht 14 unter Verwendung eines Tribo-Aufladungssystems 38 mit einer positiven Polarität versehen und auf das Substrat 10 aufgetragen. Anschließend wird die zweite Pulverlackschicht 16 ebenfalls unter Verwendung eines Tribo-Aufladungssystems 38 mit einer positiven Polarität versehen und auf die erste Pulverlackschicht 14 aufgetragen.

Bei den in den Figuren 2A bis 2D dargestellten Auftragungsverfahren handelt es sich um sogenannte Pulver-in-Pulver-Auftragungsverfahren, bei denen die zweite Pulverlackschicht 16 unmittelbar auf die erste Pulverlackschicht 14 aufgetragen wird, ohne dass die erste Pulverlackschicht 14 zunächst nennenswert aushärtet. Nachdem sowohl die erste Pulverlackschicht 14 als auch die zweite Pulverlackschicht 16 auf das Substrat 10 aufgetragen sind, wird das Substrat 10 beispielsweise unter Verwendung von heißer Luft (Umluft) und/oder von InfrarotStrahlern auf eine Temperatur von 140°C oder höher aufgeheizt. Die Temperatur wird solange aufrecht gehalten, dass eine ausreichende Vernetzung der ersten und zweiten Pulverlackschicht ermöglicht wird, wobei die Pulverlackschichten schmelzen. Je nach gewählter Temperatur und Größe und insbesondere der Wandstärke des Substrats kann die Temperatur für bis zu 40 Minuten aufrecht gehalten werden. Nachdem das Substrat 10 abgekühlt ist, ist die Beschichtung abgeschlossen.

In der Tabelle 1 sind die Werte für den Glanz und die DOI-Werte für verschiedene vorschlagsgemäße Pulverlacksysteme angegeben.

**Tabelle 1: Glanzwerte und DOI-Werte für verschiedene vorschlagsgemäße Pulverlacksysteme**

| Beispiel | Grundierung, Grundierungszusammensetzung | Auftragsweise | Decklackzusammensetzung | Auftragsweise | Glanz | DOI |
|---|---|---|---|---|---|---|
| 1 | - | C | Polyesterharz/zweiter Härter (95:5) | T | 93,0 | 63,0 |
| 2 | Epoxidharz/erster Härter (V1) | C | Polyesterharz/zweiter Härter (95:5) | T | 93,0 | 37,0 |
| 3 | Epoxidharz erster Härter (V2) | C | Polyesterharz/zweiter Härter (95:5) | T | 93,0 | 60,0 |
| 4 | 70:30 Polyesterharz/Epoxidharz (V1) | C | Polyesterharz/zweiter Härter (95:5) | T | 93,0 | 58,0 |
| 5 | 70:30 Polyesterharz/Epoxidharz (V2) | C | Polyesterharz/zweiter Härter (95:5) | T | 92,0 | 54,0 |
| 6 | 60:40 Polyesterharz/Epoxidharz (V1) | C | Polyesterharz/zweiter Härter (95:5) | T | 93,0 | 60,0 |
| 7 | 60:40 Polyesterharz/Epoxidharz (V2) | C | Polyesterharz/zweiter Härter (95:5) | T | 93,0 | 42,0 |
| 8 | 50:50 Polyesterharz/Epoxidharz (V1) | C | Polyesterharz/zweiter Härter (95:5) | T | 93,0 | 38,0 |
| 9 | 50:50 Polyesterharz/Epoxidharz (V2) | C | Polyesterharz/zweiter Härter (95:5) | T | 93,0 | 56,0 |

Die Bestimmung des Glanzes erfolgte nach DIN EN ISO 2813 und die Bestimmung des DOI-Wertes erfolgte nach ASTM D5767 mit dem Messgerät Rhopoint IQ.

Für die Grundierung 18 (Epoxidharz/ erster Härter) sind zwei verschiedene erste Härter 22 verwendet worden, die aus der angegebenen Gruppe ausgewählt worden sind. Die Versionen V1 und V2 der Grundierungszusammensetzung 30 unterscheiden sich wie folgt: Bei den beiden Versionen der Polyesterharz / Epoxidharz (70:30) besitzt die erste Version V1 eine im Vergleich zur zweiten Version V2 höhere Viskosität bei den oben genannten Aushärtebedingungen. Bei den beiden Versionen der Polyesterharz / Epoxidharz (60:40) besitzt die erste Version V1 eine im Vergleich zur zweiten Version V2 höhere Viskosität und eine höhere Reaktivität. bei den oben genannten Aushärtebedingungen. Bei den beiden Versionen der Polyesterharz / Epoxidharz (50:50) besitzt die erste Version V1 eine im Vergleich zur zweiten Version V2 niedrigere Viskosität und eine höhere Reaktivität bei den oben genannten Aushärtebedingungen.

Es wurde immer dieselbe Decklackzusammensetzung verwendet. Sämtliche angegebenen Verhältnisse beziehen sich auf Gew.-%.

Die Schichtdicken betrugen sowohl für die erste Pulverlackschicht 14 als auch für die zweite Pulverlackschicht 16 jeweils zwischen 60 und 80 pm.

Es zeigt sich, dass beim Einsatz von Carboxyl-funktionellem Polyesterharz 26 und dem zweiten Härter 28 auf β-Hydroxyalkylamid-Basis für die Decklackzusammensetzung 24 sowohl mit der Grundierung 18 auf Basis eines Epoxidharzes 20 und mit dem ersten Härter 22 als auch mit der Grundierungszusammensetzung 30 umfassend ein katalysiertes Carboxyl-funktionelles Polyesterharz 32 und ein Epoxidharz 34, jeweils in den angegebenen Verhältnissen, Pulverlacksysteme mit hohen Glanzwerten und hohen DOI-Werten erzielen lassen.

### Bezugszeichenliste

- 10: Substrat
- 12: Pulverlacksystem
- 12₁, 12₂: Pulverlacksystem
- 14: erste Pulverlackschicht
- 16: zweite Pulverlackschicht
- 18: Grundierung
- 20: Epoxidharz
- 22: erster Härter
- 24: Decklackzusammensetzung
- 26: Carboxyl-funktionelles Polyesterharz
- 28: zweiter Härter
- 30: Grundierungszusammensetzung
- 32: katalysiertes Carboxyl-funktionelles Polyesterharz
- 34: Epoxidharz
- 36: Korona-Aufladungssystem
- 38: Tribo-Aufladungssystem

## Patentansprüche

1. Pulverlacksystem (12) zum Beschichten eines insbesondere metallischen Substrats (10), umfassend
- eine erste Pulverlackschicht (14), welche
als eine Grundierung (18) auf Basis eines Epoxidharzes (20) und mit einem ersten Härter (22) ausgebildet ist, oder
als eine Grundierungszusammensetzung (30) ausgebildet ist, wobei die Grundierungszusammensetzung (30) ein katalysiertes Carboxyl-funktionelles Polyesterharz (32) und ein Epoxidharz (34) im Verhältnis von 80:20 Gew.-% bis 45:55 Gew.-% umfasst oder hieraus besteht, und
- eine auf die erste Pulverlackschicht (14) aufgetragene zweite Pulverlackschicht (16), welche als eine Decklackzusammensetzung (24) ausgebildet ist, wobei die Decklackzusammensetzung (24) ein Carboxyl-funktionelles Polyesterharz (26) und einen zweiten Härter (28) auf β-Hydroxyalkylamid-Basis im Verhältnis von 98:2 Gew.-% bis 92:8 Gew.-% umfasst oder hieraus besteht, wobei
- das Pulverlacksystem (12)
einen Glanz von ≥ 85 Glanzeinheiten und
einen DOI-Wert ≥ 35 und insbesondere ≥ 55 aufweist.

2. Pulverlacksystem (12) nach Anspruch 1,
**dadurch gekennzeichnet, dass** das Verhältnis von katalysiertem Carboxyl-funktionellen Polyester (32) zu Epoxidharz (34) der Grundierungszusammensetzung (30) zwischen 65:35 Gew.-% und 55:45 Gew.-% insbesondere zwischen 58:42 Gew.-% und 62:38 Gew.-% beträgt.

3. Pulverlacksystem (12) nach einem der Ansprüche 1 oder 2,
**dadurch gekennzeichnet, dass** das Verhältnis von Carboxyl-funktionellem Polyesterharz (26) zum zweiten Härter (28) auf β-Hydroxyalkylamid-Basis der Decklackzusammensetzung (24) zwischen 96:4 Gew.-% und 94:6 Gew.-% beträgt.

4. Pulverlacksystem (12) nach einem der vorherigen Ansprüche,
**dadurch gekennzeichnet, dass** das katalysierte Carboxyl-funktionelles Polyesterharz (32) der Grundierungszusammensetzung mit aminbasierten Katalysatoren oder Phasentransfer-Katalysatoren katalysiert ist.

5. Pulverlacksystem (12) nach Anspruch 4,
**dadurch gekennzeichnet, dass** die PhasentransferKatalysatoren ausgewählt sind aus einer Gruppe, welche quartäre Phosphoniumsalze und quartäre Ammoniumsalze umfasst.

6. Pulverlacksystem (12) nach einem der vorherigen Ansprüche,
**dadurch gekennzeichnet, dass** der erste Härter (22)
- auf Basis von Aminen oder Di- und Polyphenolen oder Carboxy-funktionellen Acrylatharzen, katalysiert mit substituierten Imidazolen oder Epoxy-Imidazol-Addukten oder substituierten Imidazolinen oder uronbasierten Beschleunigern,
- mit Salzen von mindestens difunktionellen Polycarbonsäuren und cyclischen Amidinen, oder
- als eine Kombination aus Cyanursäure mit 2-Phenylimidazolin formuliert ist.

7. Verfahren zum Auftragen eines Pulverlacksystems (12) nach einem der vorherigen Ansprüche auf ein metallisches Substrat (10), umfassend die Schritte
- Auftragen der ersten Pulverlackschicht (14) auf das Substrat (10) unter Verwendung eines Korona-Aufladungssystems (36) mit einer negativen Polarität und Auftragen der zweiten Pulverlackschicht (16) auf das Substrat (10) unter Verwendung eines Korona-Aufladungssystems (36) mit einer negativen Polarität, oder
- Auftragen der ersten Pulverlackschicht (14) auf das Substrat (10) unter Verwendung eines Korona-Aufladungssystems (36) mit einer negativen Polarität und Auftragen der zweiten Pulverlackschicht (16) auf das Substrat (10) unter Verwendung eines Korona-Aufladungssystems (36) mit einer positiven Polarität, oder
- Auftragen der ersten Pulverlackschicht (14) auf das Substrat (10) unter Verwendung eines Korona-Aufladungssystems (36) mit einer negativen Polarität und Auftragen der zweiten Pulverlackschicht (16) auf das Substrat (10) unter Verwendung eines Tribo-Aufladungssystems (38) mit einer positiven Polarität, oder
- Auftragen der ersten Pulverlackschicht (14) auf das Substrat (10) unter Verwendung eines Tribo-Aufladungssystems (38) mit einer positiven Polarität und Auftragen der zweiten Pulverlackschicht (16) auf das Substrat (10) unter Verwendung eines Tribo-Aufladungssystems (38) mit einer positiven Polarität.

8. Verfahren nach Anspruch 7, umfassend folgenden Schritt:
- Aufheizen des beschichteten Substrats (10) auf eine Temperatur von ≥ 140°C.

9. Verwendung eines Pulverlacksystems (12) nach einem der Ansprüche 1 bis 6, welches auf ein metallisches Substrat (10) aufgetragen ist.
